# EUROPÄISCHE PATENTSCHRIFT

(11) **EP 1 099 493 B1**
(45) Veröffentlichungstag und Bekanntmachung des Hinweises auf die Patenterteilung: **11.06.2003**
(21) Anmeldenummer: 00121519.3
(22) Anmeldetag: 30.09.2000
(51) Int. Cl.: B21D 43/22

(54) **Stapelanlage für mittelgrosse Blechteile**
Stacking device for medium sized sheet metal pressings
Dispositif pour empiler des pièces en tôle de moyenne dimension

(30) Priorität: 02.11.1999 DE 19952688
(43) Veröffentlichungstag der Anmeldung: 16.05.2001
(73) Patentinhaber: ThyssenKrupp Drauz Ingenieurbetrieb GmbH, 09337 Hohenstein-Ernstthal (DE)
(72) Erfinder: Bünning, Klaus, 09113 Chemnitz (DE); Rohland, Jörg, 09119 Chemnitz (DE); Stein, Hans, 09358 Wüstenbrand (DE)
(74) Vertreter: Illing, Ralf, Dipl.-Jur. Ing.

(56) Entgegenhaltungen:
- EP-A- 0 434 096
- DE-A- 3 405 432
- DE-A- 3 737 913

## Beschreibung

Die Erfindung betrifft eine Stapelanlage für mittelgroße Blechteile, insbesondere Kraftfahrzeug-Karosserieteile, die mittels Transferpresse hergestellt werden, bestehend aus Klinkenspeicher und einer bis zum Klinkenspeicher verlängerten Transfereinrichtung der Transferpresse.

Es ist eine Stapelanlage für Kraftfahrzeug-Karosserieteile bekannt, bei der die Pressteile durch die Greifer der verlängerten Transfereinrichtung der Transferpresse auf die der Kontur der Pressteile angepassten Schablone eines Hubwerkes abgelegt werden. Dieses taktet mit zunehmender Stapelhöhe nach unten, bis die vorgesehene Stapelhöhe erreicht ist. Dann werden Zwischenstapelklinken eingeschwenkt, auf die weiter gestapelt wird. Das Hubwerk senkt den Pressteilbehälterboden mit dem darauf befindlichen Stapel bis zur Auflage auf dem Pressteilbehälterrahmen ab. Dieser Pressteilbehälter wird gegen einen leeren Pressteilbehälter automatisch getauscht, dessen Behälterboden durch das Hubwerk angehoben wird und die auf den Zwischenstapelklinken inzwischen aufgestapelten Pressteile übernimmt, wobei die Zwischenstapelklinken ausgeschwenkt und hochgefahren werden. Der Behälterboden wird nun weiter nach unten getaktet und nach Erreichen der vorgesehenen Stapelhöhe unter Einschwenken der Zwischenstapelklinken auf den Pressteilbehälterrahmen abgesetzt (DE 37 37 913 A1).
Diese Lösung ist nur für die Aufnahme eines einzelnen Stapels von Pressteilen pro Pressteilbehälter geeignet.

Es ist Aufgabe der Erfindung, eine gattungsgemäße Stapelanlage für mittelgroße Blechteile zu schaffen, die mehrere Stapel Blechteile nebeneinander und übereinander in einen Transportbehälter ablegen kann, wobei der Ablagevorgang der einzelnen Stapel Blechteile während der Zeit des Aufstapelns eines weiteren Stapels Blechteile erfolgen soll. Damit soll durch einfache, leicht verstellbare oder auswechselbare Baugruppen ein großes Spektrum an Blechteilen durch eine Stapelanlage in Transportbehälter transportiert werden, wobei die hohe Stückleistung einer Transferpresse ohne Verzögerung erfüllt werden soll.

Die Aufgabe wird erfindungsgemäß durch die Merkmale des Patentanspruches 1 gelöst.
Die Merkmale der Unteransprüche sind vorteilhafte Ausgestaltung des Patentanspruches 1.

Für den Innenraum der Kraftfahrzeugkarosserie, die Türen, den Kofferraum und den Motorraum werden eine Vielzahl von mittelgroßen verschiedenen Blechteilen benötigt, die auf Transferpressen mit hoher Stückleistung hergestellt werden. Von diesen Blechteilen müssen mehrere nebeneinander und als Stapel übereinander liegen, um den Innenraum eines der in der Kraftfahrzeugindustrie üblichen Transportbehälter optimal auszunutzen. Durch den Klinkenspeicher mit zwei übereinander angeordneten Klinkenebenen und die Hubeinrichtung mit Hubgrößen zum Anheben eines Blechteiles in die untere Klinkenebene und einer weiteren Hubgröße zum Anheben des gewünschten Stapel Blechteile in die obere Klinkenebene wird die Voraussetzung geschaffen, ohne Unterbrechung in die untere Klinkenebene zu stapeln. Während des Aufbaues des unteren Stapels entnimmt ein Industrieroboter mittels seiner Transportvorrichtung den auf der oberen Klinkenebene befindlichen Stapel Blechteile und legt ihn auf den programmierten Platz im Transportbehälter ab. Zur Vermeidung des Umfallens einzelner Stapel Blechteile werden Einstapelhilfen oder Transportbehälter mit den Blechteilen angepassten Innenraumformen verwendet. Für den An- und Abtransport der leeren und gefüllten Transportbehälter, die vorzugsweise paarweise bewegt werden, ist quer zur Transferrichtung eine Transportbahn mit drei Stationen zum Eingeben, Befüllen und Entnehmen der Transportbehälter angeordnet. Die schnelle Umrüstung der Stapelanlage auf anders augebildete Blechteile wird vor allem durch den Wechsel der vollständigen Baugruppen erreicht, die der Form der zu stapelnden Blechteile angepasst sein müssen. Zur Stapelung von Mehrfachteilen werden mehrere Klinkenspeicher parallel angeordnet und durch eine gemeinsame Hubeinrichtung beschickt.

In der Zeichnung ist die Erfindung an einem Ausführungsbeispiel erläutert. Es zeigt
- Fig. 1: eine Seitenansicht der Stapelanlage und
- Fig. 2: eine Draufsicht mit Industrieroboter und Stapelbehältern.

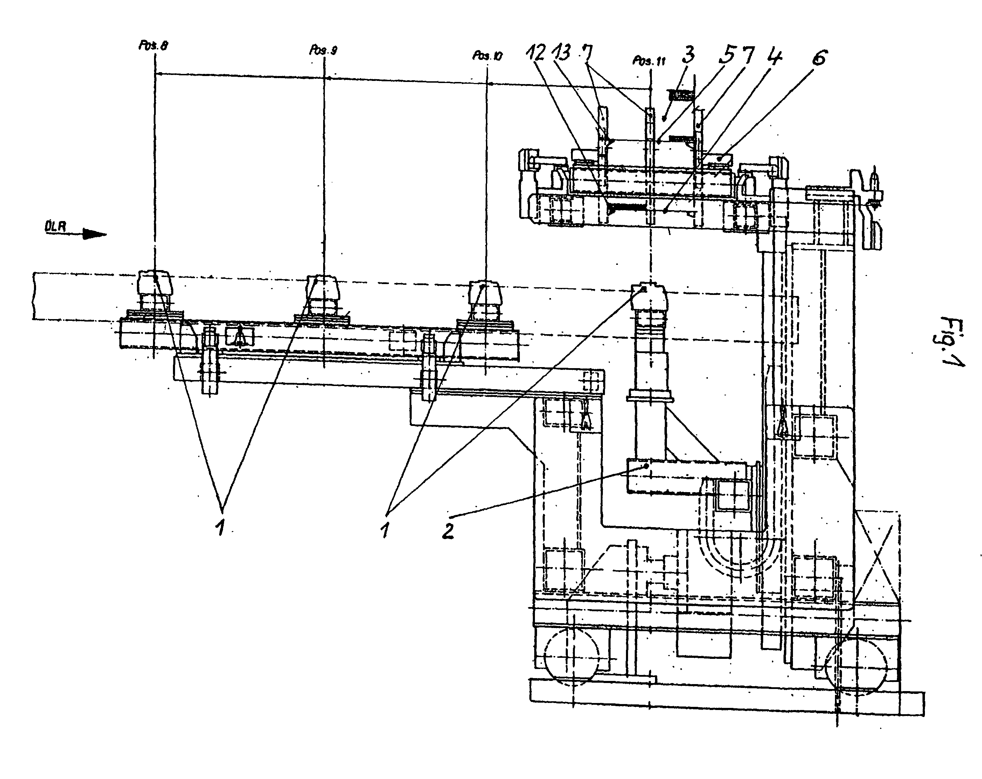

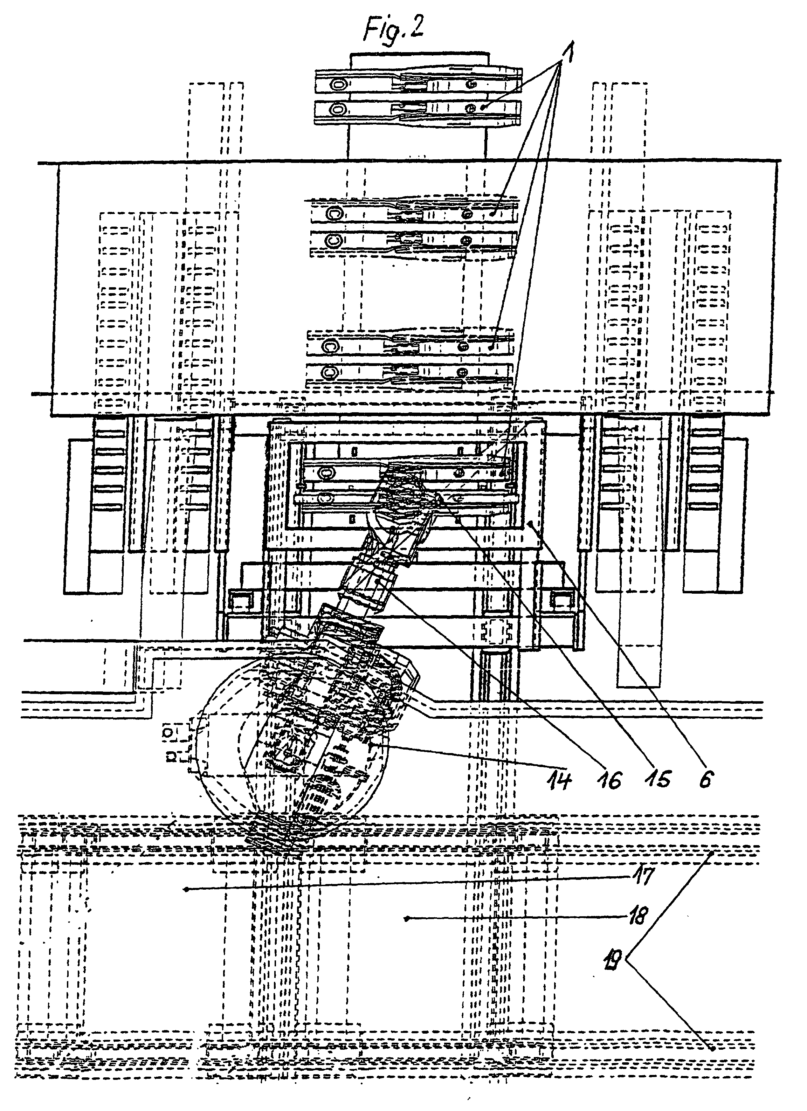

Die nicht gezeichneten Greiferschienen der Transferpresse sind um die Positionen 8, 9 bis zur Position 10 verlängert und führen auch in diesen Positionen die üblichen Schließ-, Hebe-, Vorschub-Senk-, öffnen- und Rücklaufbewegungen aus (Fig.1). In den Positionen 8 bis 11 befinden sich der Blechteilform angepasste Zwischenablagen 1, die schnell wechselbar sind. Die Zwischenablage 1 der Position 11 befindet sich auf einem nach oben bewegbaren Hubwerk 2. Für ein bestimmtes Blechteil ist die untere Endlage des Hubwerkes 2 fest eingestellt und dient wiederkehrend als Ausgangsstellung.
Über dem Hubwerk 2 ist mittig zur Position 11 ein verstellbarer und schnell wechselbarer Klinkenspeicher 3 mit zwei Speicherebenen 4;5 angeordnet. Der Klinkenspeicher 3 besteht aus einem rahmenförmigen Gehäuse 6, dessen Öffnung der Größe der zu stapelnden Blechteile angepasst ist. In der öffnung sind leicht und schnell verstellbar vier senkrechte Klinkenträger 7 in Rungenform befestigt. Jeder dieser Klinkenträger 7 ist mit zwei federbelasteten Klinken 12;13 versehen, die in Längsrichtung des Klinkenträgers 7 zur Anpassung an die Blechteilform verstellbar sind. Die eine der Klinken 12 ist im unteren Bereich des Klinkenträgers 7 angeordnet und die zweite Klinke 13 um etwas mehr als die maximale Stapelhöhe darüber. Als Hubgrößen des Hubwerkes 2 sind zwei Wege gespeichert. Die eine Hubgröße ist durch die Lage der unteren Klinkenebene 4 bestimmt. Als Anzahl der Hübe wird die Zahl der zu stapelnden Blechteile ingegeben. Der letzte Stapelhub ist bis zur oberen Stapelebene 5 programmiert, wird jeweils nur einmalig ausgeführt und hebt den angesammelten Stapel Blechteile der unteren Klinkenebene 4 auf die obere Klinkenebene 5.
Über dem Klinkenspeicher 3 ist ein Industrieroboter 14 angeordnet, dessen Hand als Entnahmegreifer 15 für einen Stapel Blechteile ausgebildet ist (Fig.2). Der Mehrgelenkarm 16 des Industrieroboters 14 führt die erforderlichen Bewegungen aus, um den Entnahmegreifer 15 mit dem Stapel Blechteile vom Klinkenspeicher 3 zu Transportbehältern 17;18 zu bewegen, die auf Führungsbahnen 19 rechtwinklig zur Transferrichtung verschiebbar sind. Der Mehrgelenkarm 16 führt weiterhin die Rückbewegung aus und ist für den Wechsel des Entnahmegreifers 15 auch auf eine Wechselposition programmiert.
Die Führungsbahnen 19 der Transportbehälter 17;18 sind in drei Stationen unterteilt. Auf der ersten und dritten Station werden sowohl leere Transportbehälter abgesetzt als auch gefüllte Transportbehälter abtransportiert. Die zweite Station befindet sich etwa vor dem Klinkenspeicher 3 und dient zum Beladen der Transportbehälter mit gestapelten Blechteilen. Es ist vorteilhaft, jeweils zwei Transportbehälter 17;18 tandemartig zu verbinden. Da mehrere Stapel Blechteile in, jedem Transportbehälter nebeneinander und übereinander abgelegt werden, sind zwischen den Stapeln Stapelhilfen von Vorteil, die zum Zwecke des Wechsels der Transportbehälter 17;18 heb- und senkbar angeordnet sind und als vollständige Baugruppe für einen und/oder zwei Transportbehälter bei Umrüstung auf andere zu stapelnde Blechteile wechselbar sind.

Die Arbeitsweise der Stapelanlage ist folgende:
Die in den Werkzeugen der Transferpresse umgeformten Blechteile werden außerhalb der Transferpresse durch die verlängerten Greiferschienen über die Positionen 8, 9 und 10 zur Position 11 - dem Hubwerk 2 - transportiert. Auf der teilespezifisch geformten Ablage 1 des Hubwerkes 2 wird ein Blechteil abgelegt und durch die kleinere Hubbewegung des Hubwerkes 2 im Arbeitstakt der Transferpresse bis unmittelbar über die unteren Klinken 12 des Klinkenspeichers 3 angehoben. Dann wird das Hubwerk 2 in die Ausgangsposition abgesenkt und steht für die Ablage des nächsten Blechteiles zur Verfügung. Durch die Absenkbewegung des Hubwerkes 2 wird das in den Klinkenspeicher 3 gehobene Blechteil auf die unteren Klinken 12 abgelegt. Dieser Vorgang wiederholt sich so oft es die gewünschte Anzahl der gestapelten Blechteile erfordert.
Mit dem letzten Blechteil ist der größere Hub einmalig programmiert, der den vollständigen Stapel Blechteile durch die oberen Klinken 13 hindurch hebt und bei der Rückbewegung auf den oberen Klinken 13 ablegt. Nun folgen wieder so viele kleine Hübe, wie für den gewünschten Stapel erforderlich sind. In dieser Zeit erfasst der Entnahmegreifer 15 des Industrieroboters 14 den auf den oberen Klinken 13 abgelegten Stapel Blechteile, hebt diesen aus dem Klinkenspeicher 3 heraus, schwenkt ihn über einen der Transportbehälter 17;18 und legt ihn dort auf den Boden des Transportbehälters 17;18 ab. Den nächsten Stapel legt er daneben ab. Dieser Vorgang wiederholt sich bis zur Füllung des einen Transportbehälters in mehreren Ebenen übereinander. Danach wird der zweite Transportbehälter gefüllt. In der Pause bis zur nächsten Industrieroboterbewegung werden die beiden gefüllten Transportbehälter 17;18 zur ersten oder dritten Station zum Abtransport verschoben und gleichzeitig zwei leere Transportbehälter 17;18 von der gegenüber liegenden Station zur zweiten Station bewegt.
Werden durch die Transferpresse Mehrfachblechteile hergestellt, so sind auch diese durch die erfindungsgemäße Stapelanlage stapelbar. Dazu werden mehrere Klinkenspeicher 3 über den verlängerten Greiferschienen der Transferpresse angeordnet. Unter den Klinkenspeichern 3 ist weiterhin ein Hubwerk 2 angeordnet, das jedoch mit der Anzahl der den Mehrfachblechteilen entsprechenden Anzahl von Zwischenablagen 1 versehen ist. Für die Entnahme der gestapelten Blechteile aus den oberen Stapelebenen 5 bedarf es eines kombinierten Entnahmegreifers 15 des Industrieroboters 14, der alle Stapel gleichzeitig erfasst und in den oder die Transportbehälter 17;18 ablegt.
Bei Umstellung der Transferpresse auf ein anderes Blechteil werden in dieser Zeit die mit Schnellwechselverbindungen versehenen blechteilspezifischen Auflagen 1, Greifer 15, Klinkenträger 7 und der Klinkenspeicher 3 gewechselt. Bei kurzen Umstellzeiten ist der Wechsel mit voreingestellten Baugruppen vorteilhaft.

### Liste der Bezugszahlen

- 1: Zwischenablage
- 2: Hubwerk
- 3: Klinkenspeicher
- 4: untere Klinkenebene
- 5: obere Klinkenebene
- 6: rahmenförmiges Gehäuse
- 7: Klinkenträger
- 8/9/10/11: Positionen
- 12: untere Klinke
- 13: obere Klinke
- 14: Industrieroboter
- 15: Entnahmegreifer
- 16: Mehrgelenkarm
- 17/18: Transportbehälter
- 19: Führungsbahn

## Patentansprüche

1. Stapelanlage für mittelgroße Blechteile, insbesondere Kfz-Karosserieteile, die mittels Transferpresse hergestellt werden, bestehend aus Klinkenspeicher und einer bis zum Klinkenspeicher verlängerten Transfereinrichtung der Transferpresse, **gekennzeichnet durch**
- einen oder mehrere Klinkenspeicher (3) für Einfach- oder Mehrfachblechteile mit zwei übereinander angeordneten verstellbaren Klinkenebenen (4;5),
- einer unterhalb der letzten Transferstation (11) angeordneten Hubeinrichtung (2) mit steuerbarer Hubgröße für das Anheben des in der letzten Transferstation befindlichen Blechteiles oder der Blechteile in die untere Klinkenebene (4) des Klinkenspeichers (3) und einer weiteren steuerbaren Hubgröße für das Anheben des auf der unteren Klinkenebene (4) gebildeten Stapels oder der Stapel Blechteile auf die obere Klinkenebene (5),
- einen über dem Klinkenspeicher (3) angebrachten Industrieroboter (14), dessen Greifer (15) als Transportvorrichtung für einen Stapel mittelgroßer Blechteile ausgebildet ist und dessen Mehrgelenkarm (16) vom Klinkenspeicher (3) zu einem Transportbehälter (17;18) für mehrere Stapel mittelgroßer Blechteile bewegbar ist.

2. Stapelanlage nach Anspruch 1,
**dadurch gekennzeichnet,**
**dass** alle der Form des zu stapelnden Blechteiles angepassten Baugruppen, nämlich die Werkstückauflagen (1) der verlängerten Transfereinrichtung, die Werkstückauflage (1) der Hubeinrichtung (2), der Greifer (15) des Industrieroboter (14) und der Klinkenspeicher (3) als vollständige Baugruppe wechselbar sind.

3. Stapelanlage nach Anspruch 1,
**dadurch gekennzeichnet,**
**dass**, von der Transferpresse gesehen, nach dem Klinkenspeicher (3) quer zur Transferrichtung eine Führungsbahn (19) die Transportbehälter (17;18) mit drei Stationen angeordnet ist, deren mittlere Station die Befüllstation ist und hinter dem Klinkenspeicher (3) liegt und deren beide anderen Stationen rechts und links neben der mittleren Station liegen und zum Be- und Entladen der Transportbehälter (17;18) dienen.

4. Stapelanlage nach Anspruch 3,
**dadurch gekennzeichnet,**
**dass** in jeder Station der Führungsbahn (19) zwei Transportbehälter (17;18) positioniert sind.

5. Stapelanlage nach den Ansprüchen 1 bis 4,
**dadurch gekennzeichnet,**
**dass** zwei Klinkenspeicher (3) vorzugsweise für Rechts- und Linksblechteile vorgesehen sind und das Linksteil in den ersten und das Rechtsteil in den zweiten Transportbehälter (17;18) mit einem kombinierten Greifer (15) des Industrieroboters (14) abgelegt werden.

6. Stapelanlage nach den Ansprüchen 1 bis 5,
**dadurch gekennzeichnet,**
**dass** die Transportbehälter (17;18) eine der Form der Stapel der Blechteile angepasste Innenraumgestaltung haben.

7. Stapelanlage nach den Ansprüchen 1 bis 6,
**dadurch gekennzeichnet,**
**dass** die Transportbehälter (17;18) eine neutrale Innenraumgestaltung haben und in der Füllstation mit einer Einstapelhilfe gegen das Umfallen der Stapel versehen sind, die zum Zwecke des Wechsels der Transportbehälter (17;18) heb- und senkbar angeordnet ist und als vollständige Baugruppe für einen und/oder zwei Transportbehälter (17;18) bei Umristung auf andere zu stapelnde Blechteile wechselbar sind.

## Claims

1. Stacking device for medium sized sheet metal pressings, in particular motor-vehicle body parts, which are produced by means of a transfer press, the device comprising a ratchet store and a transfer device of the transfer press, the transfer device being extended as far as the ratchet store, **characterized by**
- one or more ratchet stores (3) for single or multiple sheet metal pressings having two adjustable ratchet planes (4; 5) arranged one above the other,
- a lifting device (2) which is arranged below the last transfer station (11) and has a controllable lifting range for lifting the sheet metal pressing or the sheet metal pressings situated in the last transfer station into the lower ratchet level (4) of the ratchet store (3), and a further controllable lifting range for lifting the stack or stacks of sheet metal pressings formed on the lower ratchet level (4) onto the upper ratchet level (5),
- an industrial robot (14) which is fitted above the ratchet store (3) and the gripper (15) of which is designed as a transporting device for a stack of medium sized sheet metal pressings and the multi-jointed arm (16) of which can be moved from the ratchet store (3) to a transporting container (17; 18) for a plurality of stacks of medium sized sheet metal pressings.

2. Stacking device according to Claim 1, **characterized in that** all of the subassemblies adapted to the shape of the sheet metal pressing to be stacked, namely the workpiece supports (1) of the extended transfer device, the workpiece supports (1) of the lifting device (2), the gripper (15) of the industrial robot (14) and the ratchet store (3) can be interchanged as a complete subassembly.

3. Stacking device according to Claim 1, **characterized in that** downstream of the ratchet store (3), as seen from the transfer press, a guideway (19) for the transporting containers (17; 18) and having three stations is arranged transversely with respect to the transfer direction, the central station of which guideway is the filling station and is situated behind the ratchet store (3), and the two other stations of which guideway are situated on the right and left next to the central station and serve for loading and unloading the transporting containers (17; 18).

4. Stacking device according to Claim 3, **characterized in that** two transporting containers (17; 18) are positioned in each station of the guideway (19).

5. Stacking device according to one of Claims 1 to 4, **characterized in that** two ratchet stores (3), preferably for right and left sheet metal pressings, are provided, and the left pressing is deposited into the first transporting container (17) and the right pressing is deposited into the second transporting container (18) by a combined gripper (15) of the industrial robot (14).

6. Stacking device according to one of Claims 1 to 5, **characterized in that** the transporting containers (17; 18) have an interior design adapted to the shape of the stacks of sheet metal pressings.

7. Stacking device according to one of Claims 1 to 6, **characterized in that** the transporting containers (17; 18) have a neutral interior design and are provided in the filling station with a stacking aid to prevent the stacks from falling over, which stacking aid is arranged in a manner such that it can be raised and lowered for the purpose of interchanging the transporting containers (17; 18) and can be interchanged as a complete subassembly for one and/or two transporting containers (17; 18) when changing the set-up for other sheet metal pressings which are to be stacked.

## Revendications

1. Dispositif pour empiler des pièces en tôle de dimensions moyennes, en particulier des pièces de carrosserie de véhicules automobiles, qui sont fabriquées à l'aide d'une presse à transfert, composé d'une unité de stockage à cliquet et d'un dispositif de transfert de la presse à transfert qui se prolonge jusqu'à l'unité de stockage à cliquet, **caractérisé par**
- une ou plusieurs unités de stockage à cliquet (3) pour des pièces en tôle simples ou multiples munies de deux plans à cliquet (4 ; 5) superposés positionnables ;
- un dispositif de levage (2) disposé sous la dernière station de transfert (11) avec une hauteur de levage réglable pour le levage de la pièce en tôle ou des pièces en tôle qui se trouvent dans la dernière station de transfert dans le plan à cliquet inférieur (4) de l'unité de stockage à cliquet (3) et une hauteur de levage réglable supplémentaire pour le levage de la pile ou des piles de pièces en tôle formées sur le plan à cliquet inférieur (4) sur le plan à cliquet supérieur (5) ;
- un robot industriel (14) installé au-dessus de l'unité de stockage à cliquet (3) dont la pince (15) est configurée en tant que dispositif de transport pour une pile de pièces en tôle de dimensions moyennes et dont le bras à articulations multiples (16) peut se déplacer entre l'unité de stockage à cliquet (3) et un conteneur de transport (17 ; 18) pouvant recevoir plusieurs piles de pièces en tôle de dimensions moyennes.

2. Dispositif d'empilage selon la revendication 1, **caractérisé en ce que** tous les sous-ensembles adaptés à la forme de la pièce en tôle à empiler, à savoir les porte-pièces (1) du dispositif de transfert prolongé, le porte-pièce (1) du dispositif de levage (2), la pince (15) du robot industriel (14) et l'unité de stockage à cliquet (3) peuvent être remplacés sous la forme d'un sous-ensemble complet.

3. Dispositif d'empilage selon la revendication 1, **caractérisé en ce que** vu depuis la presse de transfert, le conteneur de transport (17 ; 18) est disposé après l'unité de stockage à cliquet (3) transversalement par rapport au sens de transfert d'une glissière de guidage (19) avec trois stations dont la station centrale est la station de remplissage et se trouve derrière l'unité de stockage à cliquet (3) et dont les deux autres stations se trouvent à droite et à gauche à côté de la station centrale et servent au chargement et au déchargement du conteneur de transport (17 ; 18).

4. Dispositif d'empilage selon la revendication 3, **caractérisé en ce que** deux conteneurs de transport (17 ; 18) sont positionnés dans chaque station de la glissière de guidage (19).

5. Dispositif d'empilage selon les revendications 1 à 4, **caractérisé en ce que** deux unités de stockage à cliquet (3) sont prévues de préférence pour des pièces en tôle droites et gauches et la pièce gauche est déposée dans le premier et la pièce droite dans le deuxième des conteneurs de transport (17 ; 18) avec une pince (15) combinée du robot industriel (14).

6. Dispositif d'empilage selon les revendications 1 à 5, **caractérisé en ce que** la configuration de l'espace intérieur des conteneurs de transport (17 ; 18) est adaptée à la forme des piles de pièces en tôle.

7. Dispositif d'empilage selon les revendications 1 à 6, **caractérisé en ce que** les conteneurs de transport (17 ; 18) présentent une configuration de l'espace intérieur neutre et sont munis dans la station de remplissage d'un dispositif d'aide à l'empilage pour éviter le basculement des piles, lequel est disposé de manière à pouvoir être levé et descendu en vue du remplacement des conteneurs de transport (17 ; 18) et peut être changé de place sous la forme d'un sous-ensemble complet pour un et/ou deux conteneurs de transport (17 ; 18) lors de l'adaptation pour d'autres pièces en tôle à empiler.
